# EUROPEAN PATENT APPLICATION

(11) **EP 3 054 672 A2**
(43) Date of publication of application: **10.08.2016**
(21) Application number: 16154286.5
(22) Date of filing: 04.02.2016
(51) Int. Cl.: H04N 5/44, H04N 21/422

(54) **DISPLAY APPARATUS AND UI DISPLAYING METHOD THEREOF**

(30) Priority: 09.02.2015 KR 20150019272
(71) Applicant: Samsung Electronics Co., Ltd., Gyeonggi-do 16677 (KR)
(72) Inventor: HAN, Ji-youn, Seoul (KR)
(74) Representative: Taor, Simon Edward William

(57) **Abstract**

A display apparatus is provided and includes: a display unit displaying an image; an input unit receiving a user command; and a control unit controlling the display unit to display a first user interface UI or graphical user interface (GUI) including one or more UI elements controllable in a plurality of control schemes in the case in which a UI or GUI generating command is input through the input unit and controlling the display unit to display a second UI or GUI including UI or GUI elements different from at least one of the one or more UI elements in the case in which a preset user motion is input through the input unit.

## Description

Apparatuses and methods relate to a display apparatus and a user interface (UI) displaying method thereof, and more particularly, to a display apparatus capable of displaying a UI that may be consistently used regardless of a plurality of control schemes, and a UI displaying method thereof.

According to the related art, menus have been arranged in a form of a list on a screen of a television (TV), and a user has browsed the menus using a remote controller including four direction buttons and an enter button and then selected a desired menu to perform a control on the TV.

Meanwhile, in accordance with the advent of a smart TV, various control schemes for the TV have been introduced. An example of these control schemes for the TV includes controls of the TV by a gesture, pointing, a speech, and the like, and the TV has provided different user interfaces (UIs) or graphical user interfaces (GUIs) to the user depending on the respective control schemes.

However, since the provided UIs are different from each other due to various control schemes, new learning and experience for each of the various control schemes were required in order for the user to be accustomed to a new control scheme.

Additional aspects and/or advantages will be set forth in part in the description which follows and, in part, will be apparent from the description, or may be learned by practice of the embodiments.

Exemplary embodiments overcome the above disadvantages and other disadvantages not described above. Also, the embodiments are not required to overcome the disadvantages described above, and an exemplary embodiment need not overcome any of the problems described above.

The embodiments provide a display apparatus capable of displaying a user interface (UI) that may be consistently used regardless of a plurality of control schemes, and a UI displaying method thereof.

According to an aspect, a display apparatus includes: a display unit displaying an image; an input unit receiving a user command; and a control unit controlling the display unit to display a first UI including one or more UI elements controllable in a plurality of control schemes in the case in which a UI generating command is input through the input unit and controlling the display unit to display a second UI including UI elements different from at least one of the one or more UI elements in the case in which a preset user motion is input through the input unit.

The first and second UIs may include four UI elements corresponding to four directions, and the control unit may execute a function of a UI element of a direction corresponding to a user command corresponding to one of the four directions in the case in which the user command corresponding to one of the four directions is input.

The plurality of control schemes may be at least one of a control scheme using direction keys of a remote control apparatus, a control scheme using a pointing motion of the remote control apparatus, a control scheme using a touch panel included in the remote control apparatus, a control scheme using a photographed user motion, and a control scheme using a user speech.

When the UI generating command is input during a period in which a highlight is displayed in one of a plurality of menu items displayed on the display unit, the control unit may control the display unit to display the first UI in the vicinity of the menu item in which the highlight is displayed.

When the UI generating command is input during a period in which a pointer is displayed on the display unit, the control unit may control the display unit to change the pointer into the first UI and display the first UI.

The control unit may control the display unit to display the first UI including different UI elements depending on a currently displayed image.

The control unit may control the display unit to change the first UI into the second UI and display the second UI by an animation effect in a scheme corresponding to the preset user motion.

When a UI element of a direction corresponding to the user command is selected, the control unit may control the display unit to display the second UI including UI elements corresponding to sub-functions of a function of the selected UI element.

The control unit may control the display unit to display the first UI including UI elements set to be preferentially displayed depending on a currently displayed image and display the second UI including UI elements set to be displayed subsequently to the UI elements set to be preferentially displayed in the case in which the preset user motion is input through the input unit.

According to another aspect, a UI displaying method of a display apparatus includes: displaying a first UI including one or more UI elements controllable in a plurality of control schemes in the case in which a UI generating command is input; and displaying a second UI including UI elements different from at least one of the one or more UI elements in the case in which a preset user motion is input.

The first and second UIs may include four UI elements corresponding to four directions, and the UI displaying method of a display apparatus may further include executing a function of a UI element of a direction corresponding to a user command corresponding to one of the four directions in the case in which the user command corresponding to one of the four directions is input.

The plurality of control schemes may be at least one of a control scheme using direction keys of a remote control apparatus, a control scheme using a pointing motion of the remote control apparatus, a control scheme using a touch panel included in the remote control apparatus, a control scheme using a photographed user motion, and a control scheme using a user speech.

In the displaying of the first UI, when the UI generating command is input during a period in which a highlight is displayed in one of a plurality of menu items displayed on a display unit, the first UI may be displayed in the vicinity of the menu item in which the highlight is displayed.

In the displaying of the first UI, when the UI generating command is input during a period in which a pointer is displayed on a display unit, the pointer may be changed into the first UI and the first UI may be displayed.

In the displaying of the first UI, the first UI including different UI elements may be displayed depending on a currently displayed image.

In the displaying of the second UI, the first UI may be changed into the second UI and the second UI may be displayed, by an animation effect in a scheme corresponding to the preset user motion.

In the displaying of the second UI, when a UI element of a direction corresponding to a user command is selected, the second UI including UI elements corresponding to sub-functions of a function of the selected UI element may be displayed.

In the displaying of the first UI, the first UI including UI elements set to be preferentially displayed depending on a currently displayed image may be displayed, and in the displaying of the second UI, the second UI including UI elements set to be displayed subsequently to the UI elements set to be preferentially displayed may be displayed in the case in which the preset user motion is input.

According to still another aspect, a non-transitory computer readable medium includes a program for executing a UI displaying method of a display apparatus, wherein the UI displaying method of a display apparatus includes: displaying a first UI including one or more UI elements controllable in a plurality of control schemes in the case in which a UI generating command is input; and displaying a second UI including UI elements different from at least one of the one or more UI elements in the case in which a preset user motion is input.

According to an aspect a graphical user interface (GUI) display method includes displaying a first GUI on a display containing an image with which a user interacts and displaying a second GUI on the display used to interact with the image consistently between different interaction methods for interacting with the image when a user activates the first GUI element.

The interaction methods may include at least one from among a direction key method, a pointer method, a touch method, a user motion method and a user speech method.

The second GUI element a selection GUI may control selection of functions.

The selection GUI may include function controls for activating a corresponding function.

The corresponding function may include a menu.

The selection GUI may include the function controls displayed about a center point of the selection GUI.

The function controls may be positioned around the center on axes of the display.

The display may include a smart television.

According to an aspect a display apparatus includes a display displaying an image, an input unit receiving a user command and a control unit, comprising a computer, displaying the image on the display and producing a graphical user interface (GUI) displayed on the image, where the GUI may include a first GUI on the display containing an image with which a user interacts and a second GUI on the display used to interact with the image consistently between different interaction methods for interacting with the image when a user activates the first GUI element, where the methods comprise at least one from among a direction key method, a pointer method, a touch method, a user motion method and a user speech method.

According to an aspect, a non-transitory computer readable medium including a program for executing a GUI (graphical user interface) displaying method of a display apparatus, where the GUI displaying method may include displaying a first GUI displayed on an image of the display apparatus and including one or more first GUI elements controllable in a plurality of control schemes when a GUI generating command is input and displaying a second GUI displayed on the image and including second GUI elements different from at least one of the one or more UI elements when a preset user motion is input, where the second GUI on the display apparatus is used to interact with the image consistently between different interaction methods for interacting with the image when a user activates the first GUI, where the interaction methods comprise at least one from among a direction key method, a pointer method, a touch method, a user motion method and a user speech method.

According to an aspect of the invention, there is provided a display apparatus as set out in claim 1. Preferred features are set out in claims 2 to 10.

According to an aspect of the invention, there is provided a method as set out in claim 11. Preferred features are set out in claims 12 to 15.

The above and/or other aspects will be more apparent by describing certain exemplary embodiments with reference to the accompanying drawings, in which:
FIG. 1 is a block diagram illustrating a configuration of a display apparatus according to an exemplary embodiment;
FIG. 2 is a view illustrating user interfaces (UIs) differently displayed depending on various television (TV) control schemes according to the related art;
FIGS. 3A and 3B are views illustrating a UI consistently displayed regardless of a plurality of control schemes according to an exemplary embodiment;
FIGS. 4A to 4C are views illustrating a displaying method of a first UI according to an exemplary embodiment;
FIGS. 5A to 5D are views illustrating a selecting method of a UI element included in the first UI according to an exemplary embodiment;
FIG. 6 is a view illustrating a region in which a pointer moves in the case in which a UI is displayed, according to an exemplary embodiment;
FIG. 7 is a view illustrating a second UI in which sub-UI elements of a UI element selected by a user are displayed, according to an exemplary embodiment;
FIG. 8 is a view illustrating that a UI element is included and displayed in first and second UIs depending on a priority, according to an exemplary embodiment;
FIGS. 9A to 9D are views that a first UI is changed into a second UI and the second UI is displayed depending on a user motion, according to an exemplary embodiment;
FIGS. 10A to 10C are views that a first UI is changed into a second UI and the second UI is displayed by an animation effect in a scheme corresponding to a preset user motion, according to an exemplary embodiment;
FIGS. 11A to 11C are views illustrating that a UI including different UI elements is displayed depending on a currently displayed image, according to an exemplary embodiment;
FIG. 12 is a view illustrating that a UI displayed on a screen of a TV disappears, according to an exemplary embodiment;
FIG. 13 is a block diagram illustrating a configuration of a display apparatus according to another exemplary embodiment; and
FIG. 14 is a flow chart for describing a UI displaying method of a display apparatus according to an exemplary embodiment.

Reference will now be made in detail to the embodiments, examples of which are illustrated in the accompanying drawings, wherein like reference numerals refer to the like elements throughout. The embodiments are described below by referring to the figures.

The exemplary embodiments of the present disclosure may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope of the present disclosure. Also, well-known functions or constructions are not described in detail since they would obscure the disclosure with unnecessary detail.

The terms "first", "second", etc. may be used to describe diverse components, but the components are not limited by the terms. The terms are only used to distinguish one component from the others.

The terms used in the present application are only used to describe the exemplary embodiments, but are not intended to limit the scope of the disclosure. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

Hereinafter, exemplary embodiments will be described in detail with reference to the accompanying drawings.

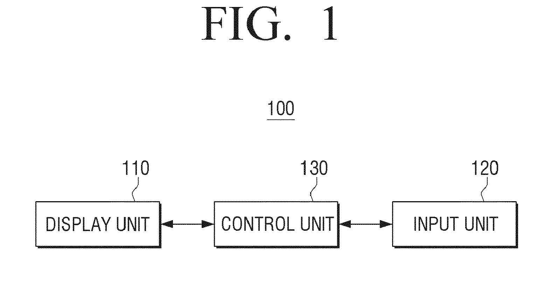

FIG. 1 is a block diagram illustrating a configuration of a display apparatus according to an exemplary embodiment.

As illustrated in FIG. 1, a display apparatus 100 is configured to include a display unit 110, an input unit 120, and a control unit 130.

The display unit 110 displays an image. In detail, the display unit 110 may display an image such as a broadcasting content transmitted from a broadcasting station, a video on demand (VOD), or the like.

In addition, the display unit 110 may display a menu for executing a basic program. Here, the menu may include menu items for executing the basic program that may provide a basic function of the display apparatus 100.

Meanwhile, the display unit 110 may be implemented by a liquid crystal display (LCD), an organic light emitting display (OLED), a plasma display panel (PDP), or the like.

The input unit 120 receives a user command. In detail, the input unit 120 may receive a user command for controlling the display apparatus 100.

Here, the user command for controlling the display apparatus 100 may include a button manipulation of a remote control apparatus, a pointing manipulation of the remote control apparatus, a manipulation using a touch panel included in the remote control apparatus, a user motion, a user speech, and the like. Here, the remote control apparatus may be implemented by a remote controller, a pointing device, or the like.

The control unit 130 may control a general operation of the display apparatus 100 and be called a central processing unit, a microprocessor, a processor, or the like.

In addition, in the case in which a user interface (UI) or graphical user interface (GUI) generating command is input through the input unit 120, the control unit 130 controls the display unit 110 to display a first UI.

In detail, when the UI generating command is input through the input unit 120, the control unit 130 may control the display unit 110 to display the first UI. For example, when a user presses a specific button of the remote control apparatus, takes a specific pointing action using the remote control apparatus, takes a specific action using the touch panel included in the remote control apparatus, takes a specific motion, or speaks a specific word, the control unit 130 may recognize that the UI generating command is input and control the display unit 110 to display the first UI.

Meanwhile, when the UI generating command is input during a period in which a highlight is displayed in one of a plurality of menu items displayed on the display unit 110 (that is, the item is implicitly selected), the control unit 130 may control the display unit 110 to display the first UI or GUI in the vicinity of the menu item in which the highlight is displayed.

In detail, the control unit 130 may control the display unit 110 to display the plurality of menu items on the display unit 110. In addition, when the user performs a manipulation for moving between the plurality of menu items, the control unit 130 may control the display unit 110 to display the vicinity of a menu item to which the user wants to move as a highlight or implicit selection. In this case, when the user inputs a manipulation for generating the first UI, the control unit 130 may control the display unit 110 to display the first UI in the vicinity of the menu item in which the highlight is displayed.

Meanwhile, when the UI generating command is input during a period in which a pointer is displayed on the display unit 110, the control unit 130 may control the display unit 110 to change the pointer into the first UI and display the first UI or GUI.

In detail, the control unit 130 may control the display unit 110 to display the pointer moving in a direction corresponding to a direction manipulation of the user on the display unit 110. In this case, when the user inputs a manipulation for generating the first UI, the control unit 130 may control the display unit 110 to change the pointer into the first UI and display the first UI.

Meanwhile, the control unit 130 controls the display unit 110 to display the first UI including one or more UI elements. In detail, the first UI may include UI elements corresponding to the respective functions of the display apparatus 100. For example, the first UI may include one or more of a UI element corresponding to a volume adjusting function, a UI element corresponding to a setting function, a UI element corresponding to a channel list searching function, and a UI element corresponding to a recently viewed channel searching function.

Meanwhile, the user may control the UI elements or GUI in a plurality of control schemes or interaction methods. In detail, the user may select the UI elements using at least one of a control scheme using direction keys of the remote control apparatus, a control scheme using pointing motion of the remote control apparatus, a control scheme using the touch panel included in the remote control apparatus, a control scheme using photographed (or captured) user motion, and a control scheme using user speech.

In addition, when the user selects a direction key of a specific direction of the remote control apparatus, the control unit 130 may recognize that a UI element of a direction corresponding to a user command is selected and execute a function corresponding to the selected UI element.

Further, when the user moves a pointer in a specific direction using a remote control apparatus having a pointing function, the control unit 130 may recognize that a UI element of a direction corresponding to a user command is selected and execute a function corresponding to the selected UI element.

Further, when the user touches the touch panel of the remote control apparatus in a specific direction, the control unit 130 may recognize that a UI element of a direction corresponding to a user command is selected and execute a function corresponding to the selected UI element.

Further, when the user takes a motion moving his/her hand, arm, or the like, in a specific direction, the control unit 130 may recognize that a UI element of a direction corresponding to a user motion command is selected and execute a function corresponding to the selected UI element or GUI.

Further, when the user inputs a word representing a specific direction, the control unit 130 may recognize that a UI element of a direction corresponding to a user command is selected and execute a function corresponding to the selected UI element.

Meanwhile, first and second UIs may include four UI elements or controls (widgets) corresponding to four directions. In detail, the control unit 130 may control the display unit 110 to divide a first UI region into an upper region, a lower region, a left region, and a right region and display the first UI including the UI elements or controls on each of the divided regions. Likewise, the control unit 130 may control the display unit 110 to divide a second UI region into an upper region, a lower region, a left region, and a right region and display the second UI including the UI elements on each of the divided regions.

In this case, when a user command corresponding to one of the four directions is input, the control unit 130 may execute a function of a UI element or GUI of a direction corresponding to the user command. In detail, when the user inputs a direction manipulation in a state in which the first UI is displayed on the display unit 110, the control unit 130 may recognize that a UI element of a direction corresponding to the user command is selected and execute a function corresponding to the selected UI element.

For example, when the user inputs a direction manipulation to the left passes over the controls on the left, the control unit 130 may recognize that a UI element of a direction corresponding to the user command is selected. In this case, when a function corresponding to a UI element present in the left region of the first UI region is volume adjustment, the control unit 130 may execute a volume adjusting function.

Meanwhile, when the UI element of the direction corresponding to the user command is selected, the control unit 130 may control the display unit 110 to display a second UI including UI elements or further GUI corresponding to sub-functions of a function of the selected UI element. For example, when the user selects a UI element of a left direction and a function corresponding to the selected UI element is volume adjustment, a newly displayed second UI or GUI may include UI elements corresponding to sub-functions (for example, volume-up (by one step), volume-down (by one step), volume-up (by three steps), and volume-down (by three steps)) of the volume adjusting function.

Here, in the case in which a preset user motion (preset user action or command) is input through the input unit, the control unit 130 controls the display unit 110 to display a second UI including UI elements different from at least one of one or more UI elements included in the first UI.

Here, the preset user motion (preset user action or command) may be an action of pressing a specific button of the remote control apparatus, an action of shaking the remote control apparatus, an action of overturning the remote control apparatus, a specific pointing action using the remote control apparatus, a specific action (an action of pressing a touch pad, an action of simultaneously pressing two points, or the like) using the touch panel of the remote control apparatus, a specific motion (an action of shaking a hand, an arm, or the like, an action of overturning the hand or the arm, an action of squeezing the hand, or the like) in the case of motion recognition, and an action of speaking a specific word ('next', or the like) in the case of speech recognition. However, the preset user motion is not limited thereto in embodiments of the invention, but may include user motions in various forms for displaying the second UI. In this case, the remote control apparatus may include a sensor for sensing that the user shakes or overturns the remote control apparatus.

Here, the second UI includes UI elements different from at least one of one or more UI elements included in the first UI. For example, in the case in which the first UI includes a first element, a second element, a third element, and a fourth element, a newly displayed second UI may include a fifth element, a sixth element, a seventh element, and an eighth element. In addition, in the case in which the first UI includes a first element, a second element, a third element, and a fourth element, only some of the elements displayed in the first UI may be changed, such that a newly displayed second UI may include the second element, the third element, the fourth element, and a fifth element.

Meanwhile, the control unit 130 may control the display unit 110 to display the second UI at the same position as a position at which the first UI is displayed.

Meanwhile, the control unit 130 may control the display unit 110 to display the first UI including different UI elements depending on a currently displayed image.

For example, in the case in which television (TV) broadcasting is currently displayed on the display unit 110, when the UI generating command of the user is input, the control unit 130 may control the display unit 110 to display the first UI including elements corresponding to functions (for example, setting, a channel list, a recently viewed channel, and volume adjustment) required during a period in which the TV broadcasting is viewed. In addition, in the case in which a VOD is currently played on the display unit 110, when the UI generating command of the user is input, the control unit
130 may control the display unit 110 to display the first UI including elements corresponding to functions (for example, play-back, a channel list, a recently viewed channel, and volume adjustment) required during a period in which the VOD is played.

Meanwhile, similar to the first UI, the second UI may be displayed on the display unit 110 so as to include different UI elements depending on a currently displayed image by a control of the control unit 130.

Meanwhile, the control unit 130 may control the display unit 110 to change the first UI into the second UI and display the second UI by an animation effect in a scheme corresponding to a preset user motion. In detail, the control unit 130 may set an animation effect in a scheme corresponding to each of specific motions of the user, and control the display unit 110 to change the first UI into the second UI and display the second UI while displaying an animation effect corresponding to a specific motion of the user when the specific motion of the user is present.

Meanwhile, the control unit 130 may control the display unit 110 to display the first UI including UI elements set to be preferentially displayed depending on a currently displayed image.

In detail, the control unit 130 may set priorities for UI elements that may be displayed in the currently displayed image using a preset reference and control the display unit 110 to display the first UI including the UI elements having the highest priority.

Here, the preset reference may be set depending on whether a function is a function that the user most frequently uses for the currently displayed image or is a function that has a slightly low use frequency, but causes inconvenience of the user when it is not displayed.

In addition, the priorities for the UI elements may also be changed by setting of the user.

Meanwhile, in the case in which the preset user motion is input, the control unit 130 may control the display unit 110 to display the second UI including UI elements set to be displayed subsequently to the UI elements set to be preferentially displayed.

For example, when UI elements corresponding to a channel switching function, a volume adjusting function, a function of moving to the most recently viewed channel, and a channel list searching function having the highest priority are included in the first UI and are displayed and functions having the second highest priority are a setting function, a broadcasting information searching function, a bookmark broadcasting searching function, and a video call function, the control unit 130 may control the display unit 110 to display the second UI including UI elements corresponding to the setting function, the broadcasting information searching function, the bookmark broadcasting searching function, and the video call function.

Meanwhile, the display apparatus 100 may include a sensor unit (not illustrated) for sensing a motion or a speech of the user.

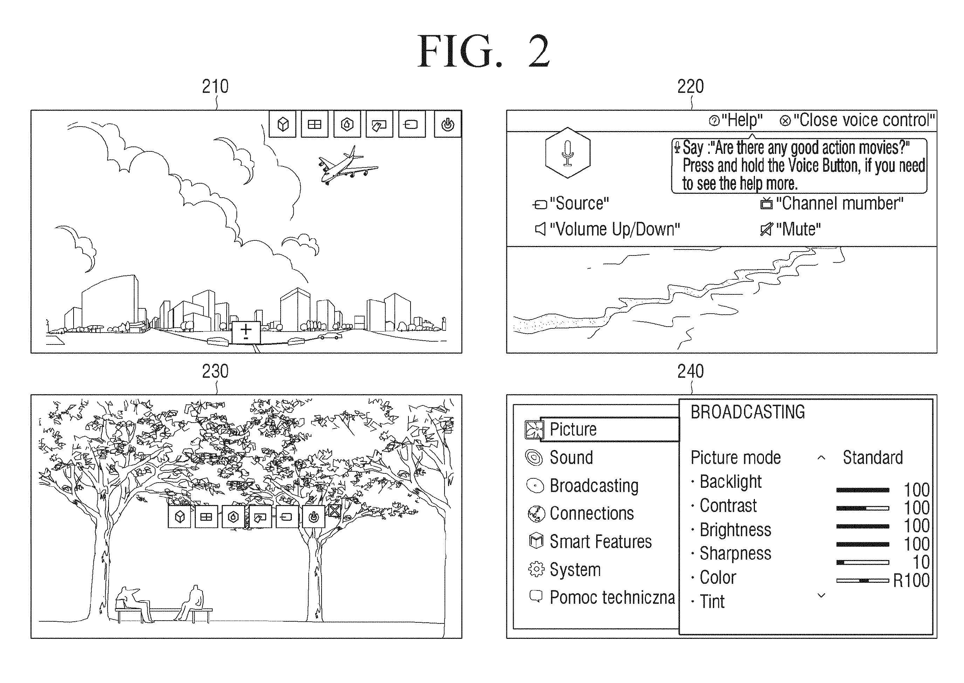

FIG. 2 is a view illustrating UIs or GUIs differently displayed depending on various TV control schemes according to the related art.

In FIG. 2, a display screen 210 in which a menu UI at the time of controlling a TV by motion recognition is displayed, a display screen 220 in which a menu UI at the time of controlling a TV by speech recognition is displayed, a display screen 230 in which a menu UI at the time of controlling a TV by a pointer is displayed, and a display screen 240 in which a menu UI at the time of controlling a TV by a remote controller including four-direction buttons is displayed are illustrated.

As illustrated in FIG. 2, according to the related art, since displaying methods of the menu UI are different from each other depending on the respective control schemes, new learning and experience for each of various control schemes were previously required in order for the user to be accustomed to a new control scheme.

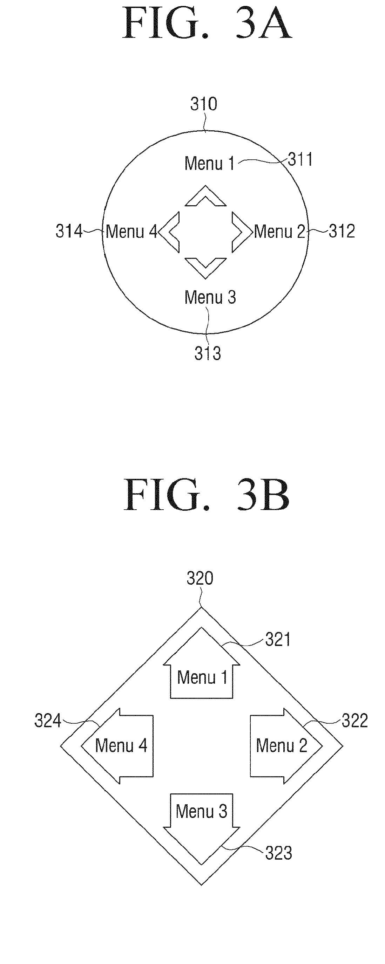

FIGS. 3A and 3B are views illustrating a UI consistently that may be standardized and displayed regardless of a plurality of control schemes according to an exemplary embodiment.

As illustrated in FIGS. 3A and 3B, when the UI generating command of the user is input through the input unit 120, the control unit 130 may control the display unit 110 to display a first UI 310 or GUI.

In this case, the first UI 310 (see FIG. 3A) may include UI elements 311 to 314 (or controls/widgets) that may be controlled in a plurality of control schemes.

A GUI control or a widget is an element of interaction in a graphical user interface (GUI), like a button or a scroll bar. Controls are software components that a computer user interacts with through direct manipulation to read or edit information or to activate functions or other elements like menus.

In addition, the UI elements 311 to 314 included in the first UI 310 may be included in an upper region, a lower region, a left region, and a right region divided from a region of the first UI 310, respectively.

Meanwhile, a second UI (not illustrated) may also be displayed in the same form as a form of the first UI 310, but may be displayed so as to include UI elements different from the UI elements included in the first UI 310.

However, although the case in which the first UI 310 includes four UI elements has been described in the present exemplary embodiment, the first UI 310 is not limited to including the four UI elements in embodiments of the invention. That is, the first UI 310 may include one or more UI elements.

In addition, although the case in which the UI elements 311 to 314 are included in the upper region, the lower region, the left region, and the right region divided from the region of the first UI 310, respectively, has been described in the present exemplary embodiment, the UI elements are not limited to being included in these regions in embodiments of the invention. For example, the UI elements 311 to 314 may also be implemented so as to be included in a right upper region, a right lower region, a left upper region, and a left lower region divided from the region of the first UI 310, respectively.

The shape of the UI elements in FIG. 3A is a chevron or "V" like shape.

FIG. 3B shows another version of the GUI 320 that can be consistently used or standardized over different interaction method where a shape of the UI elements or controls 321-324 is like an arrow. In the control GUI of FIG. 3B when the user activates one of the controls, such as control 312, a second menu "Menu 2" from among "Menu 1"-"Menu 4" is activated. When the user touches the touch panel of the remote control apparatus in the specific direction of control 312, the control unit 130 may recognize that the UI element or control corresponding to the direction corresponding to this user command is selected (in this example the function of "Menu 2" and execute a function to display "menu 2").

As described above, the UI may be standardized and consistently used regardless of control schemes of the TV by the user is provided, thereby making it possible to decrease necessity for learning of the user and improve basic usability of the TV.

In addition, a four-direction control scheme that is most or often familiar to the user regardless of control schemes of the TV by the user is provided, thereby making it possible to induce convenient use by the user.

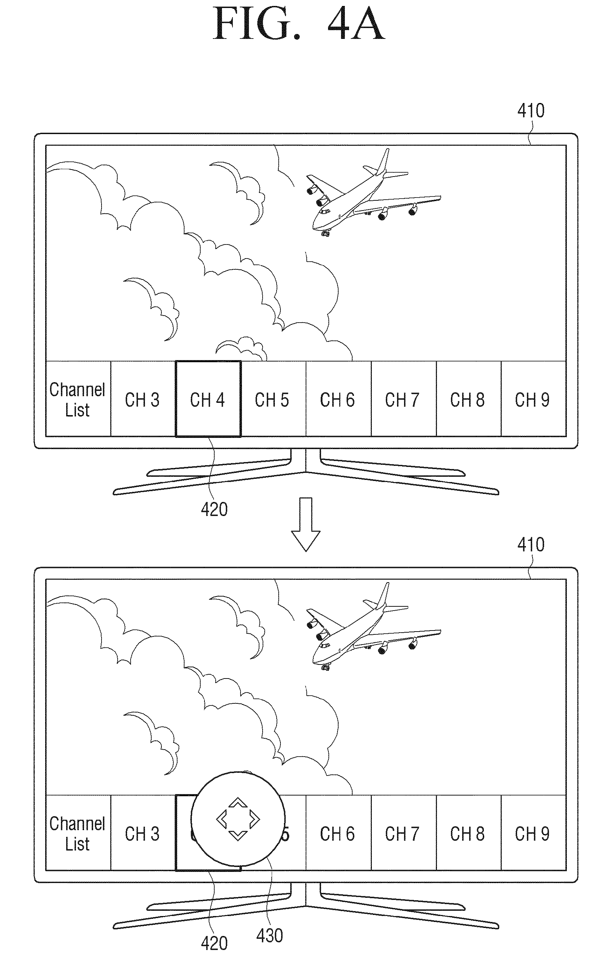

FIGS. 4A to 4C are views illustrating a displaying method of a first UI or GUI according to an exemplary embodiment.

FIG. 4A is a view illustrating that when a UI generating command is input during a period in which a highlight 420 is displayed on a screen 410 of the display unit 110, a first UI 430 is displayed in the vicinity of a menu item in which the highlight is displayed.

When the user manipulates a direction using the remote control apparatus to take a specific motion or speak a specific word, thereby performing a manipulation of moving between a plurality of menu items, the control unit 130 may control the display unit 110 to display the vicinity of a menu item to which the user wants to move as a highlight 420. In this case, when the user inputs a manipulation for generating the first UI 430, the control unit 130 may control the display unit 110 to display the first UI 430 in the vicinity of the menu item in which the highlight 420 is displayed. The highlight may be a thick border as shown or a change of color, etc.

In this case, UI elements included in the first UI 430 may be UI elements corresponding to functions related to a menu item in which the highlight 420 is displayed. For example, when a plurality of menu items showing a current channel list are displayed and the highlight 420 is displayed in a specific channel, UI elements corresponding to a function of playing a specific channel in which the highlight is displayed, a function of deleting the specific channel in which the highlight is displayed, a function of registering the specific channel in which the highlight is displayed as a preference channel, and a function of moving to the next menu item may be included in the first UI 430.

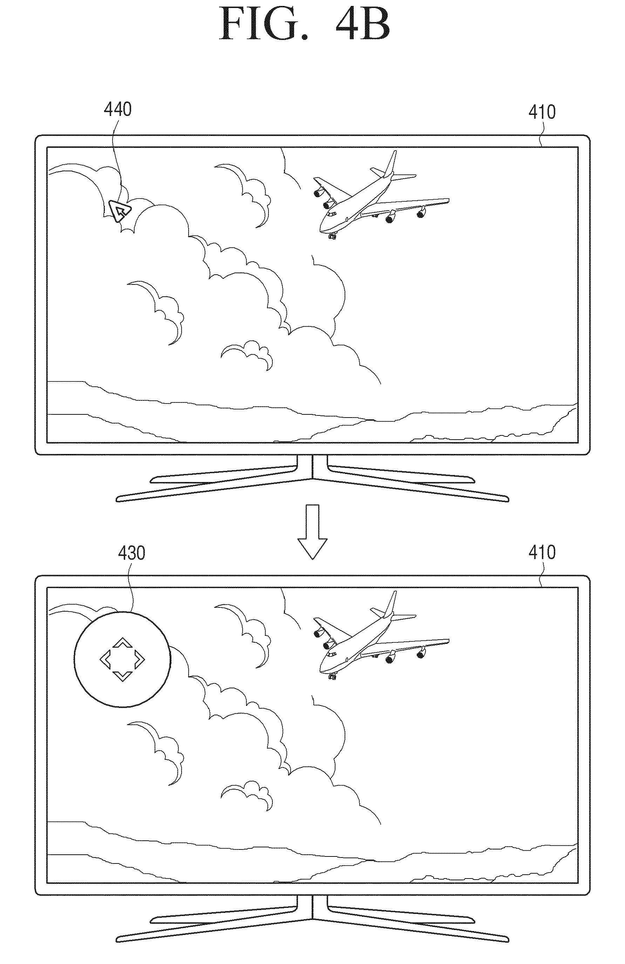

FIG. 4B is a view illustrating that when a UI generating command is input during a period in which a pointer 440 is displayed on the screen 410 of the display unit 110, the pointer 440 is changed into a first UI 430 and the first UI 430 is displayed.

In detail, the control unit 130 may control the display unit 110 to display the pointer 440 moving in a direction corresponding to a direction manipulation of the user on the screen 410 of the display unit 110. In this case, when the user inputs a manipulation for generating the first UI 430, the control unit 130 may control the display unit 110 to change the pointer 440 into the first UI 430 and display the first UI 430.

As described above, the UI is not displayed in a fixed region, but is displayed in the vicinity of a focus of the user (such as the pointer 440), thereby making it possible to induce convenient use of the user.

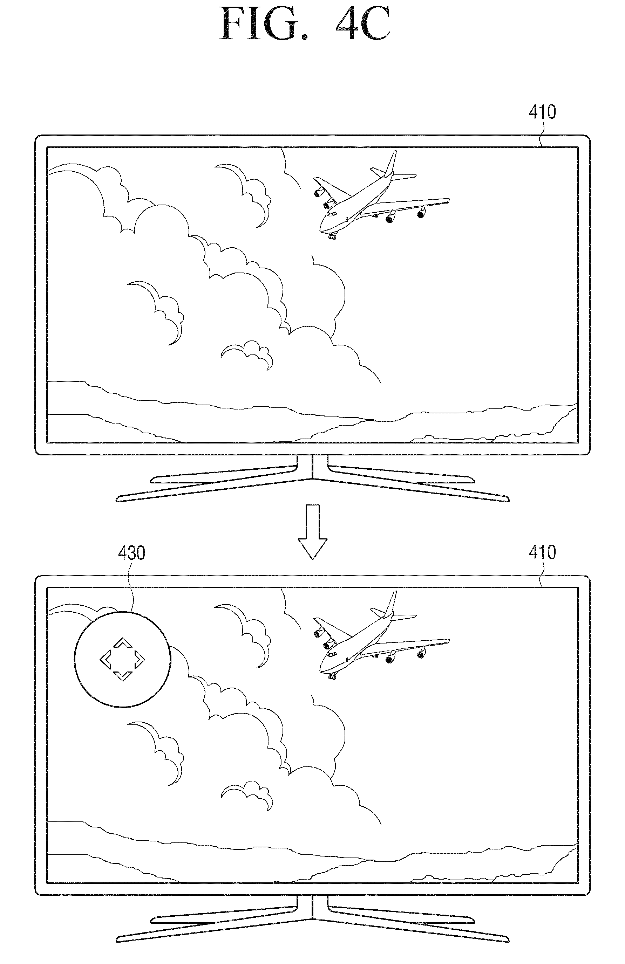

FIG. 4C is a view illustrating that a first UI 430 is displayed in the case in which the pointer or the highlight is not displayed on the screen 410 of the display unit 110.

In detail, when the user performs a specific manipulation for the remote control apparatus or inputs a specific motion or a specific speech through the input unit 120, the control unit 130 may control the display unit 110 to display the first UI 430 on a specific region of the screen 410 of the display unit 110.

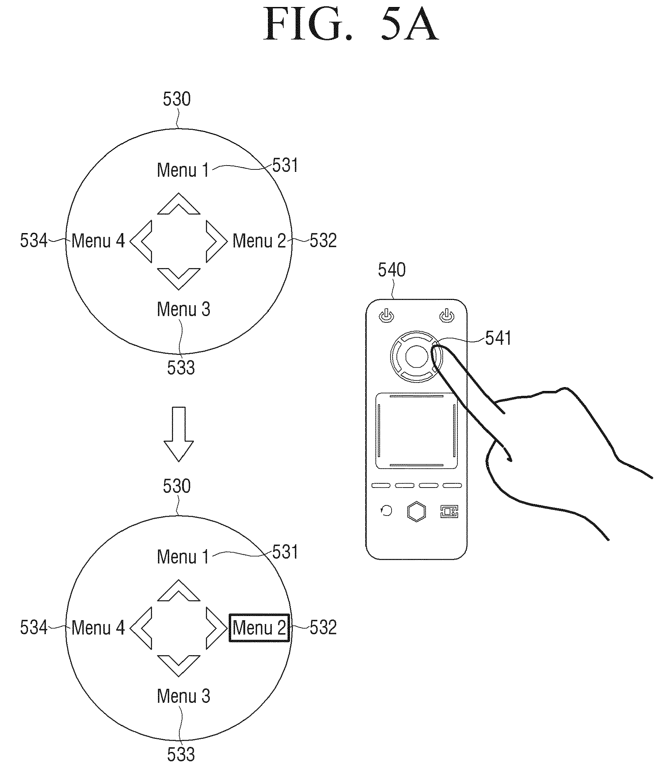

FIGS. 5A to 5D are views illustrating a selecting method of a UI element or GUI included in the first UI according to an exemplary embodiment.

As illustrated in FIG. 5A, when the user selects a direction key of a specific direction of a remote control apparatus, the control unit 130 may recognize that a UI element 532 of a direction corresponding to a user command is selected and execute a function corresponding to the selected UI element.

For example, a first UI 530 may include a first UI element 531, a second UI element 532, a third UI element 533, and a fourth UI element 534. In this case, when the user selects a direction key 541 of a right direction, the control unit 130 may recognize that a UI element 532 of the right direction, which is a direction corresponding to a user command, is selected and execute a function corresponding to the selected UI element 532. In this case, when the function corresponding to the selected UI element 532 is 'volume adjustment', the control unit 130 may control the display apparatus 100 to perform a volume adjusting function.

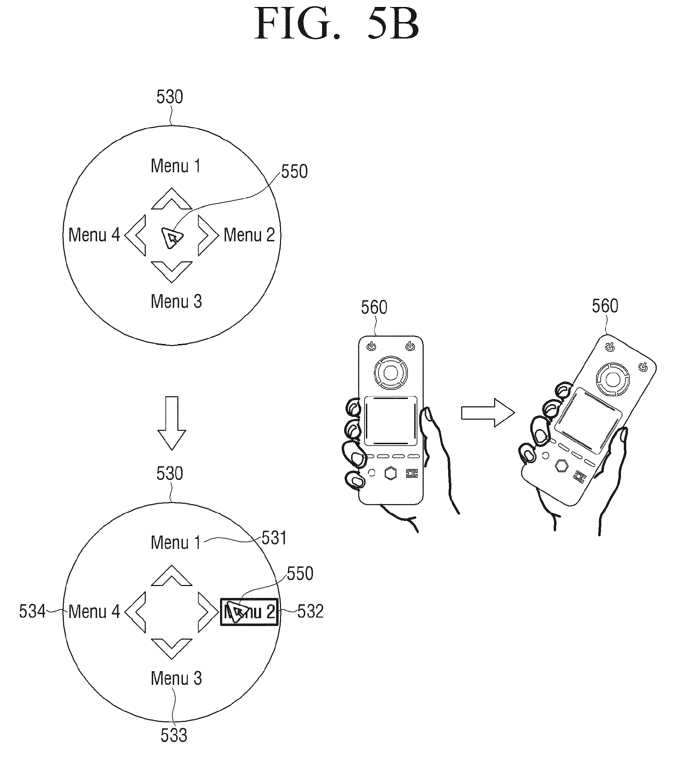

As illustrated in FIG. 5B, when the user moves a pointer 550 in a specific direction using a remote control apparatus 560 having a pointing function, the control unit 130 may recognize that a UI element 532 of a direction corresponding to a user command is selected and execute a function corresponding to the selected UI element 532.

For example, when the user moves the pointer 550 in a right direction, the control unit 130 may recognize that the UI element 532 of the right direction, which is a direction corresponding to a user command, is selected and execute a function corresponding to the selected UI element 532.

In this case, when the pointer 550 moves to a region in which UI elements 531 to 534 are positioned, the control unit 130 may recognize that the UI elements are selected. In addition, when the pointer 550 moves to the region in which UI elements 531 to 534 are positioned and the user additionally inputs a specific manipulation such as a manipulation of pressing a button, or the like, the control unit 130 may also be implemented to recognize that the input UI element is selected.

Meanwhile, although the case in which the pointer 550 is displayed on a screen of the display unit 110 has been described in the present exemplary embodiment and is not limited thereto in embodiments of the invention. That is, the control unit 130 may recognize that the UI element is selected by only recognizing a movement direction of the pointer of the user without displaying the pointer 550.

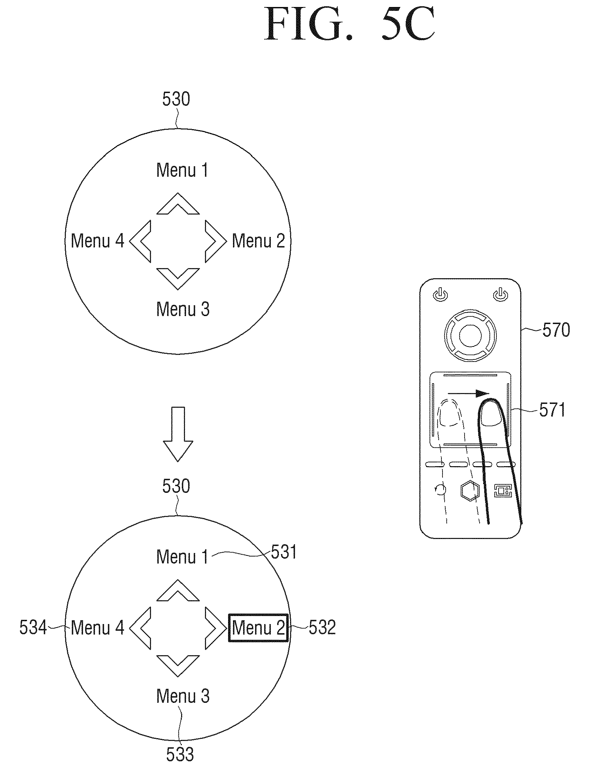

As illustrated in FIG. 5C, when the user inputs a touch motion in a specific direction on a touch panel 571 using a remote control apparatus 570 including the touch panel 571, the control unit 130 may recognize that a UI element 532 of a direction corresponding to a user command is selected and execute a function corresponding to the selected UI element.

For example, when the user inputs a touch of a right direction to the touch panel 571, the control unit 130 may recognize that the UI element 532 of the right direction, which is a direction corresponding to a user command, is selected and execute a function corresponding to the selected UI element 532.

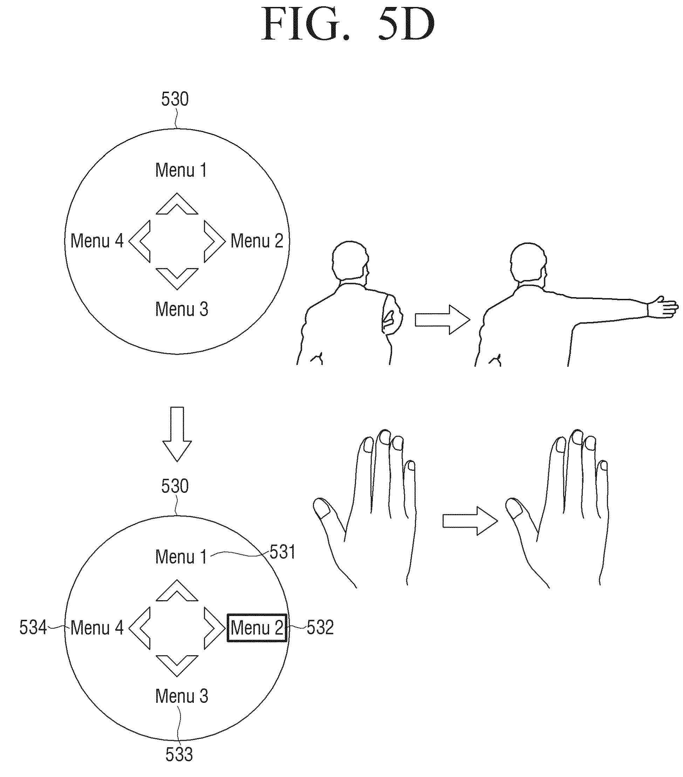

As illustrated in FIG. 5D, in the case of a display apparatus providing a motion recognizing function, when the user takes a motion of moving his/her hand, arm, or the like, in a specific direction, the control unit 130 may recognize that a UI element of a direction corresponding to a user command is selected and execute a function corresponding to the selected UI element.

For example, when the user takes a motion of moving his/her hand, arm, or the like, from a left direction to a right direction, the control unit 130 may recognize that the UI element 532 of the right direction, which is a direction corresponding to a user command, is selected and execute a function corresponding to the selected UI element 532.

Meanwhile, although not illustrated, in the case of a display apparatus providing a speech recognizing function, when the user inputs a word representing a specific direction, the control unit 130 may recognize that a UI element of a direction corresponding to a user command is selected and execute a function corresponding to the selected UI element.

For example, when the user inputs or speaks a word 'right', the control unit 130 may recognize that the UI element 532 of a right direction, which is a direction corresponding to a user command, is selected and execute a function corresponding to the selected UI element 532.

The user may also speak the name of the item such as "menu 2" as shown in Fig. 5D.

Meanwhile, although a description has been provided in relation to the first UI in FIGS. 5A to 5D, UI elements included in a second UI may be selected by a method similar to a method of selecting the UI elements included in the first UI.

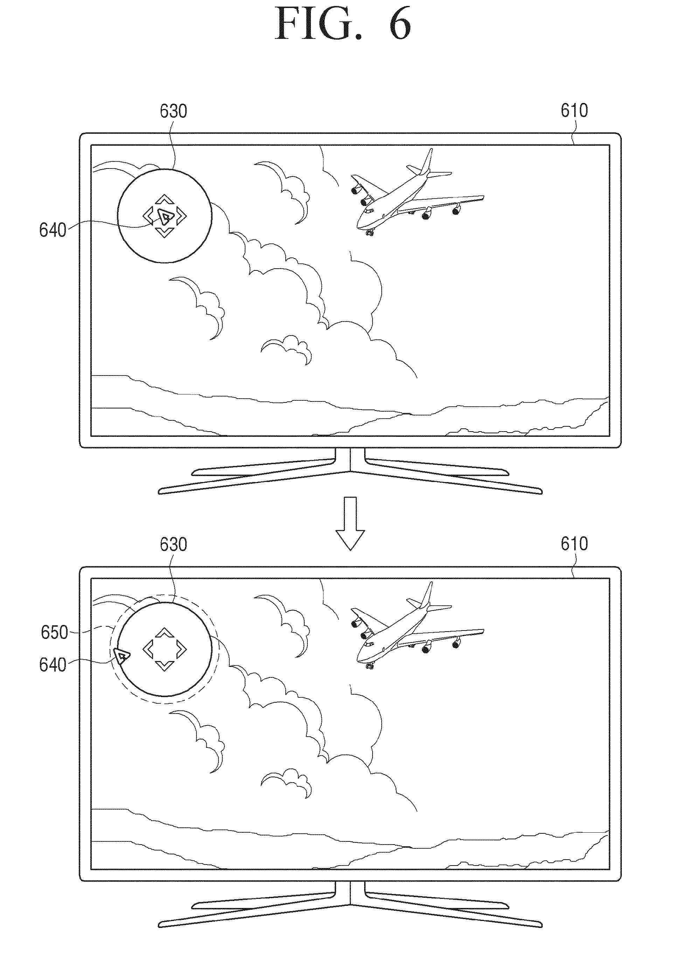

FIG. 6 is a view illustrating a region in which a pointer moves in the case in which a UI or GUI is displayed, according to an exemplary embodiment.

As illustrated in FIG. 6, generally, a pointer 640 displayed on a screen 610 of the display unit 110 may move over the entirety of the screen 610 of the display unit 110 depending on a manipulation of the user. However, in the case in which a first UI 630 or a second UI (not illustrated) is displayed, the control unit 130 may control the pointer 640 to move only within a specific region 650. In this case, a region in which the first UI 630 is displayed and the specific region 650 may coincide with each other.

As described above, a region in which the pointer 640 may move is limited to the specific region 650 in this embodiment, thereby making it possible to facilitate a pointing manipulation of the user for selecting the UI element.

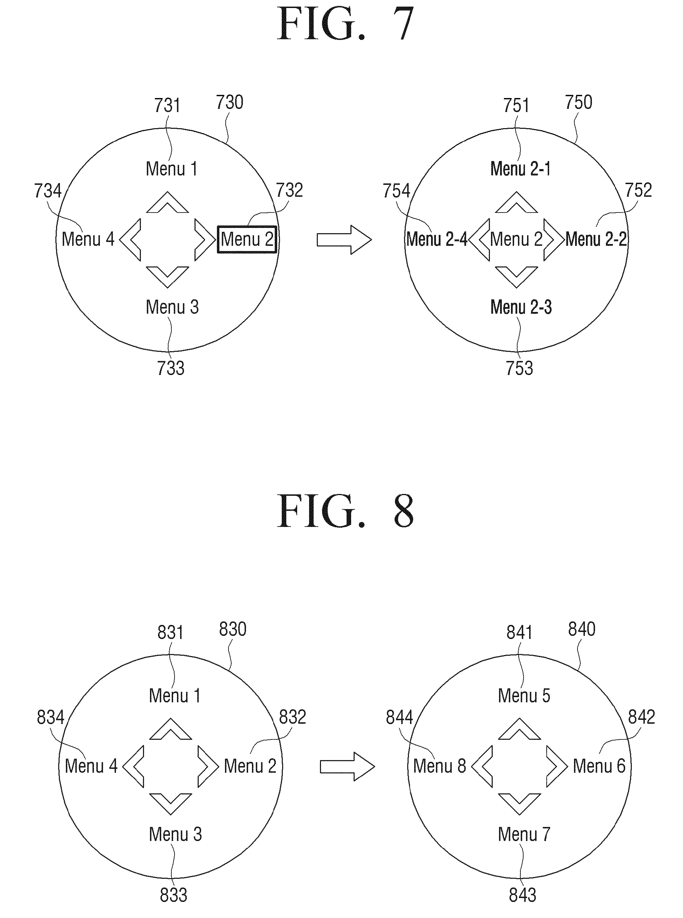

FIG. 7 is a view illustrating a second UI in which sub-UI elements of a UI element selected by a user are displayed, according to an exemplary embodiment.

As illustrated in FIG. 7, when a UI element or GUI of a direction corresponding to a user command among UI elements 731 to 734 included in a first UI 730 is selected, the control unit 130 may control the display unit 110 to display a second UI 750. In this case, the second UI 750 may include UI elements 751 to 754 corresponding to sub-functions of a function of the selected element.

That is, the UI or GUI is standardized across interactions when the first UI or GUI 730 is changed to the second UI or GUI 750.

For example, when the user selects a UI element 732 of a right direction and a function corresponding to the selected UI element 732 is volume adjustment, a newly displayed second UI 750 may include UI elements 751 to 754 corresponding to sub-functions (for example, volume-up (by one step), volume-down (by one step), volume-up (by three steps), and volume-down (by three steps)) of the volume adjusting function.

In this case, the user may select the UI elements 751 to 754 in the second UI 750 by a process similar to a process of selecting the UI elements 731 to 734 in the first UI 730.

Meanwhile, the second UI element may be positioned in the same region as a region in which the first UI element is positioned, on the screen of the display unit 110, but is not limited thereto in embodiments of the invention. For example, in the case in which a specific UI element is selected using the pointer, the control unit 130 may control the display unit 110 to display the second UI based on a position of the selected UI element.

FIG. 8 is a view illustrating that a UI element or GUI is included and displayed in first and second UIs depending on a priority, according to an exemplary embodiment.

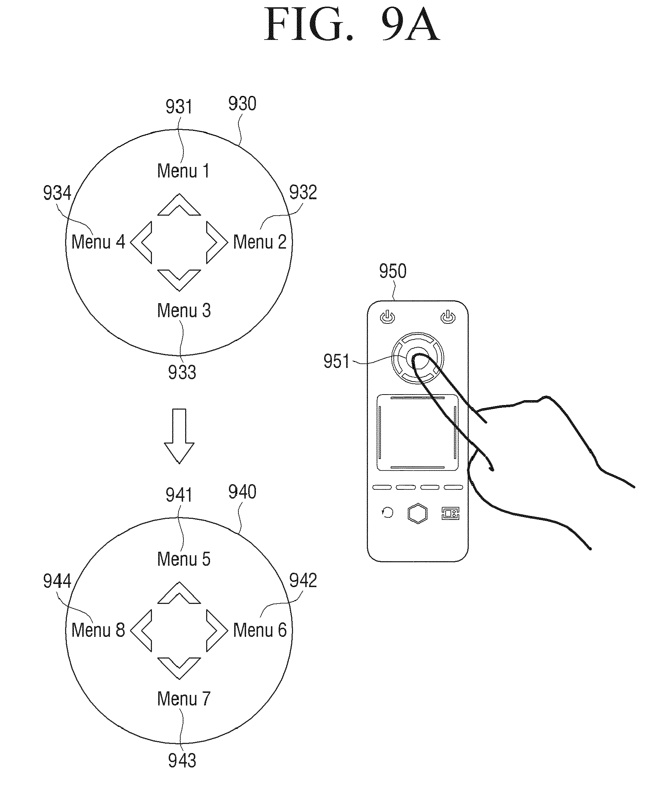

As illustrated in FIG. 8, in the case in which a preset user motion is input through the input unit, the control unit 130 may control the display unit 110 to display a second UI including UI elements different from at least one of one or more UI elements included in a first UI. A detailed description for the preset user motion will be provided below with reference to FIGS. 9A to 9D.

Here, the second UI 840 includes UI elements different from at least one of one or more UI elements included in the first UI 830. For example, in the case in which the first UI 830 includes a first element 831, a second element 831, a third element 833, and a fourth element 834, a newly displayed second UI 840 may include a fifth element 841, a sixth element 842, a seventh element 843, and an eighth element 844.

However, the embodiments are not limited thereto, but may also be implemented in a scheme of displaying a second UI in which only some of the elements displayed in the first UI are changed. For example, in the case in which the first UI includes a first element, a second element, a third element, and a fourth element, only some of the elements displayed in the first UI may be changed, such that a newly displayed second UI may include the second element, the third element, the fourth element, and a fifth element.

Meanwhile, as illustrated in FIG. 8, the control unit 130 may control the display unit 110 to display the first UI 830 including UI elements 831 to 834 set to be preferentially displayed depending on a currently displayed image.

In detail, the control unit 130 may set priorities for UI elements that may be displayed in the currently displayed image using a preset reference and control the display unit 110 to display the first UI including the UI elements having the highest priority.

For example, in the case in which TV broadcasting is currently displayed on the screen of the display unit 110, the control unit 130 may set priorities for functions (a channel switching function, a volume adjusting function, a function of moving to the most recently viewed channel, a setting function, a channel list searching function, a broadcasting information searching function, a bookmark broadcasting searching function, a video call function, and the like) required in the case in which the TV broadcasting is displayed depending on the preset reference. In addition, when the channel switching function, the volume adjusting function, the function of moving to the most recently viewed channel, and the channel list searching function have the highest priority, the control unit 130 may control the display unit 110 to display the first UI 830 including the UI elements 831 to 834 corresponding to the channel switching function, the volume adjusting function, the function of moving to the most recently viewed channel, and the channel list searching function.

Meanwhile, in the case in which the preset user motion is input, the control unit 130 may control the display unit 110 to display the second UI 840 including UI elements 841 to 844 set to be displayed subsequently to the UI elements 831 to 834 set to be preferentially displayed.

For example, when the UI elements 831 to 834 corresponding to the channel switching function, the volume adjusting function, the function of moving to the most recently viewed channel, and the channel list searching function having the highest priority are included in the first UI 830 and are displayed and functions having the second highest priority are the setting function, the broadcasting information searching function, the bookmark broadcasting searching function, and the video call function, the control unit 130 may control the display unit 110 to display the second UI 840 including the UI elements 841 to 844 corresponding to the setting function, the broadcasting information searching function, the bookmark broadcasting searching function, and the video call function.

Meanwhile, although the case in which only the UIs up to the second UI 840 are displayed has been described in the present exemplary embodiment, is not limited thereto in embodiments of the invention. For example, in the case in which the preset user motion is input in a state in which the second UI 840 is displayed, the control unit 130 may control the display unit to change the second UI 840 into a third UI (not illustrated) and display the third UI. In this case, the control unit 130 may control the display unit 110 to display the third UI including UI elements (not illustrated) set to be displayed subsequently to the UI elements 841 to 844 displayed in the second UI 840.

FIGS. 9A to 9D are views that a first UI is changed into a second UI or GUI and the second UI or GUI is displayed depending on a user motion, according to an exemplary embodiment.

As illustrated in FIGS. 9A to 9D, in the case in which a preset user motion is input through the input unit 120, the control unit 130 may control the display unit 110 to display a second UI 940 including UI elements 941 to 944 different from at least one of one or more UI elements 931 to 934 included in a first UI 930.

As illustrated in FIG. 9A, the preset user motion may be an action of pressing a specific button of a remote control apparatus 950. In detail, when the user presses a confirmation button 951 of the remote control apparatus 950, this user input may be input through the input unit 120, and the control unit 130 may control the display unit 110 to display the second UI 940 including the UI elements 941 to 944 different from at least one of one or more UI elements 931 to 934 included in the first UI 930.

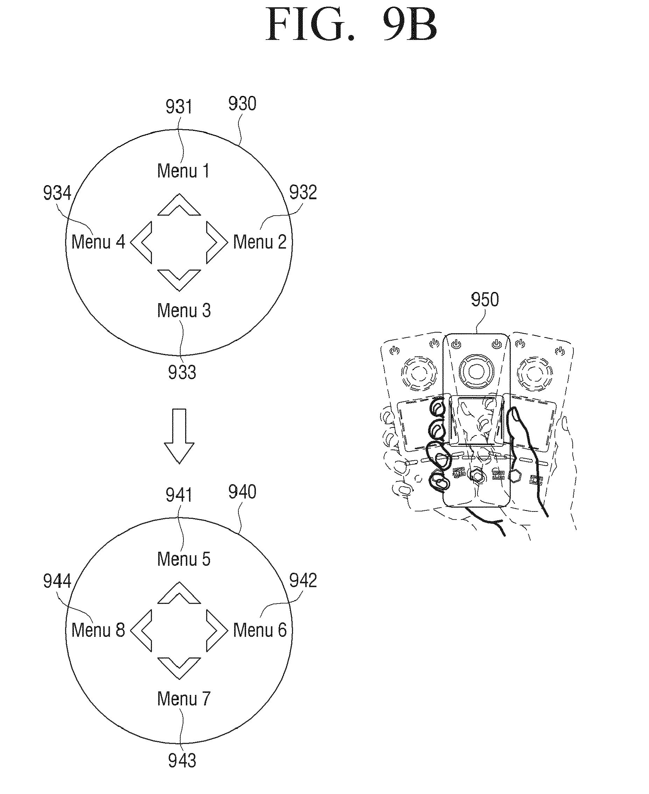

As illustrated in FIG. 9B, the preset user motion may be an action of shaking the remote control apparatus 950. In detail, when the user shakes the remote control apparatus 950, this user input may be input through the input unit 120, and the control unit 130 may control the display unit 110 to display the second UI 940 instead of the first UI 930.

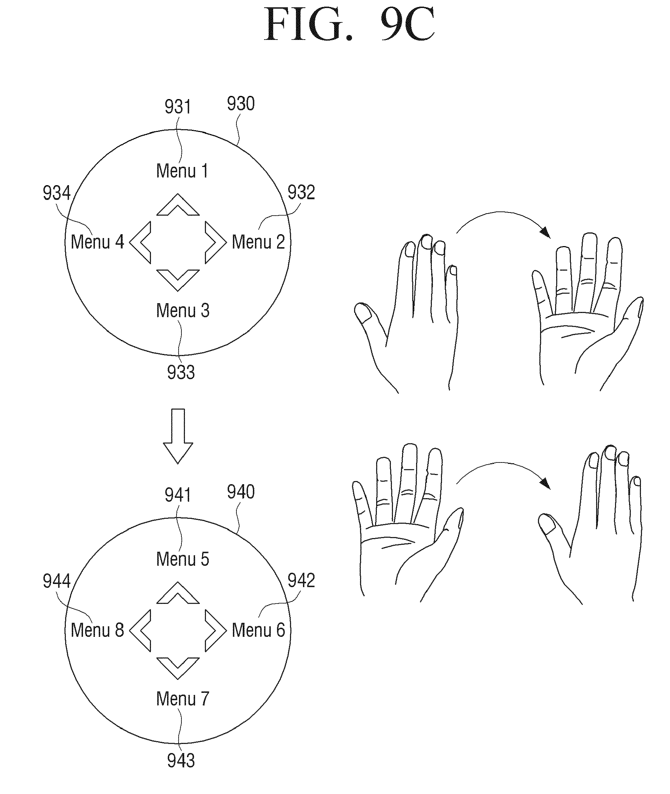

As illustrated in FIG. 9C, the preset user motion may be a specific motion (an action of overturning a hand or an arm) of the user. In detail, when the user overturns his/her hand or arm, this user input may be input through the input unit 120, and the control unit 130 may control the display unit 110 to display the second UI 940 instead of the first UI 930.

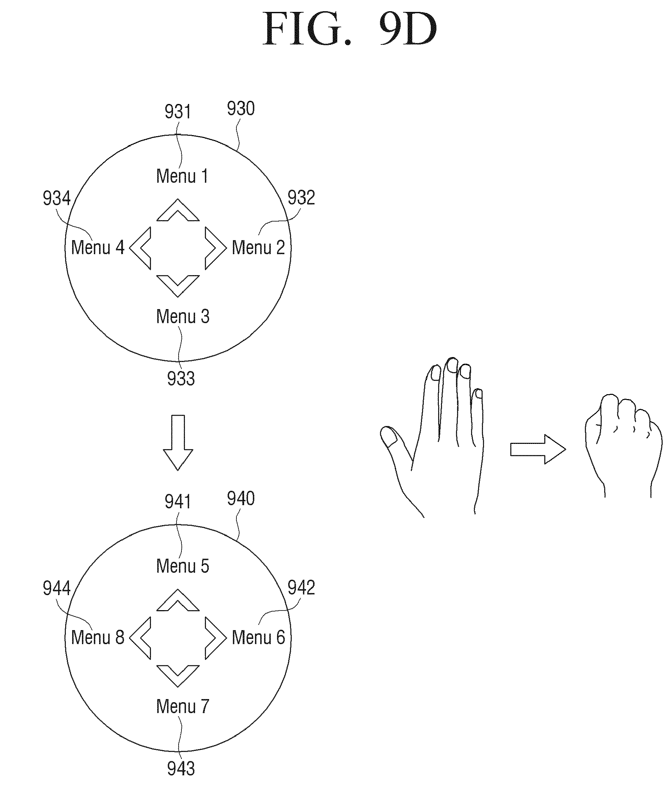

As illustrated in FIG. 9D, the preset user motion may be a specific motion (an action of squeezing a hand) of the user. In detail, when the user squeezes his/her hand, this user input may be input through the input unit 120, and the control unit 130 may control the display unit 110 to display the second UI 940 instead of the first UI 930.

Meanwhile, the preset user motion is not limited to those of the above-mentioned exemplary embodiments. That is, various user motions of allowing the second UI 940 including the UI elements 941 to 944 different from at least one of one or more UI elements 931 to 934 included in the first UI 930 to be displayed may be present. For example, the preset user motion may be an action of overturning the remote control apparatus, a specific pointing action using the remote control apparatus, a specific action (an action of pressing a touch pad or simultaneously pressing two points, or the like) using the touch panel of the remote control apparatus, a specific motion (an action of shaking a hand or an arm, or the like) in the case of motion recognition, and an action of speaking a specific word ("next", or the like) in the case of speech recognition.

Meanwhile, the display apparatus 100 may include a sensor unit (not illustrated) for recognizing a motion or a speech of the user.

In addition, the remote control apparatus 950 may include a sensor (not illustrated) for sensing a user action of shaking or overturning the remote control apparatus.

As described above, the second UI including the UI elements different from those of the first UI is displayed in response to the preset motion of the user, thereby making it possible to allow a function desired by the user to be easily searched while maintaining the four-direction control scheme.

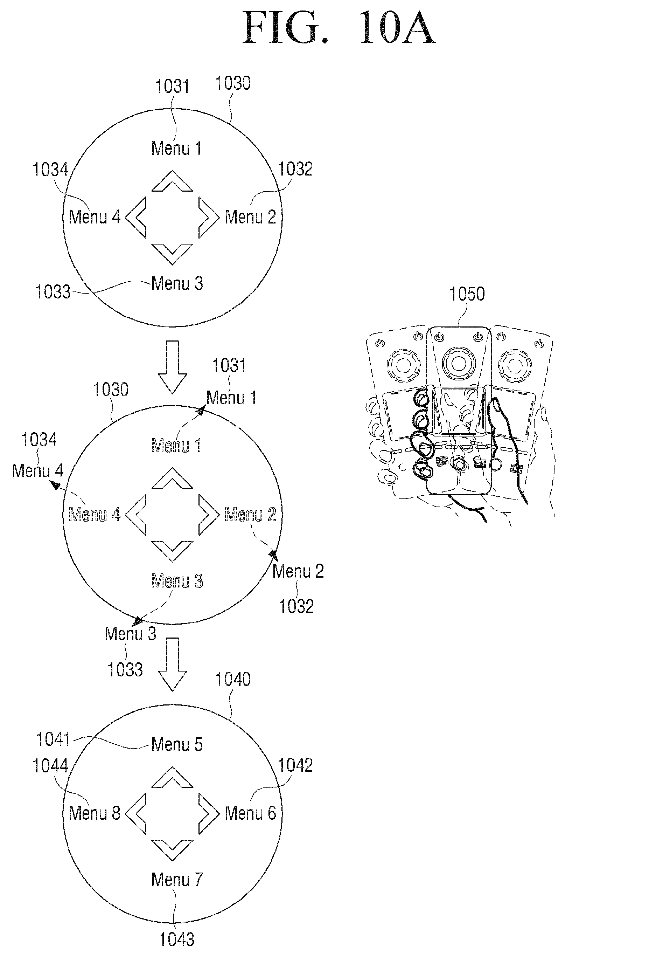

FIGS. 10A to 10C are views that a first UI is changed into a second UI and the second UI is displayed using an animation effect, such as a fade-out to fade-in in a scheme corresponding to a preset user motion, according to an exemplary embodiment.

As illustrated in FIGS. 10A to 10C, the control unit 130 may control the display unit 110 to change the first UI into the second UI and display the second UI by an animation effect in a scheme corresponding to a preset user motion.

In detail, the control unit 130 may set an animation effect in a scheme corresponding to each of specific motions of the user, and control the display unit 110 to change the first UI into the second UI and display the second UI while displaying an animation effect corresponding to a specific motion of the user when the specific motion of the user is present.

As illustrated in FIG. 10A, the control unit 130 may control the display unit 110 to display an animation effect that UI elements 1031 to 1034 included in a first UI 1030 are dispersed depending on a user motion of shaking a remote control apparatus and display a second UI 1040 including new UI elements 1041 to 1044 at a position at which the first UI 1030 was displayed.

In addition, although not illustrated, the control unit 130 may control the display unit 110 to display an animation effect that the first UI 1030 is shaken depending on a user motion of shaking the remote control apparatus and display the second UI 1040 at a position at which the first UI 1030 in a stop state was displayed.

In addition, although not illustrated, in the case of a control using motion recognition of the user, the control unit 130 may control the display unit 110 to display an animation effect that the UI elements 1031 to 1034 included in the first UI 1030 are dispersed depending on a user motion of shaking the hand, the arm, or the like, and display the second UI 1040 including the new UI elements 1041 to 1044 at the position at which the first UI 1030 was displayed.

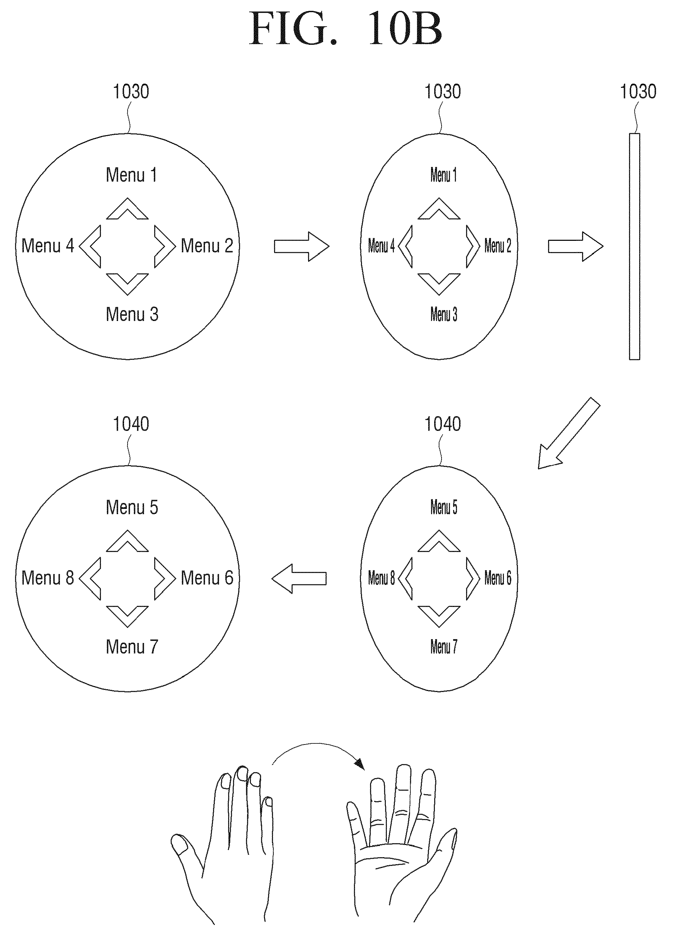

As illustrated in FIG. 10B, the control unit 130 may control the display unit 110 to display an animation effect that a first UI 1030 is overturned or turned around depending on a user motion of overturning the remote control apparatus or hand and display a second UI 1040 at a position at which the first UI 1030 in a stop state was displayed. In this case, the control unit 130 may control the display unit 110 to display an animation effect that the first UI 1030 is overturned or reversed in a direction in which the user overturns the remote control apparatus or the hand.

In addition, although not illustrated, in the case of the control using the motion recognition of the user, the control unit 130 may control the display unit 110 to display an animation effect that the first UI 1030 is overturned depending on a user motion of shaking the hand, the arm, or the like, and display the second UI 1040 at a position at which the first UI 1030 in a stop state was displayed. In this case, the control unit 130 may control the display unit 110 to display an animation effect that the first UI 1030 is overturned in a direction in which the user overturns his/her hand or arm.

In addition, although not illustrated, in a case of a control using speech recognition of the user, the control unit 130 may control the display unit 110 to change the first UI 1030 into the second UI 1040 and display the second UI 1040 by an animation effect corresponding to an input of a word 'shaking', 'overturning', or the like, by the user.

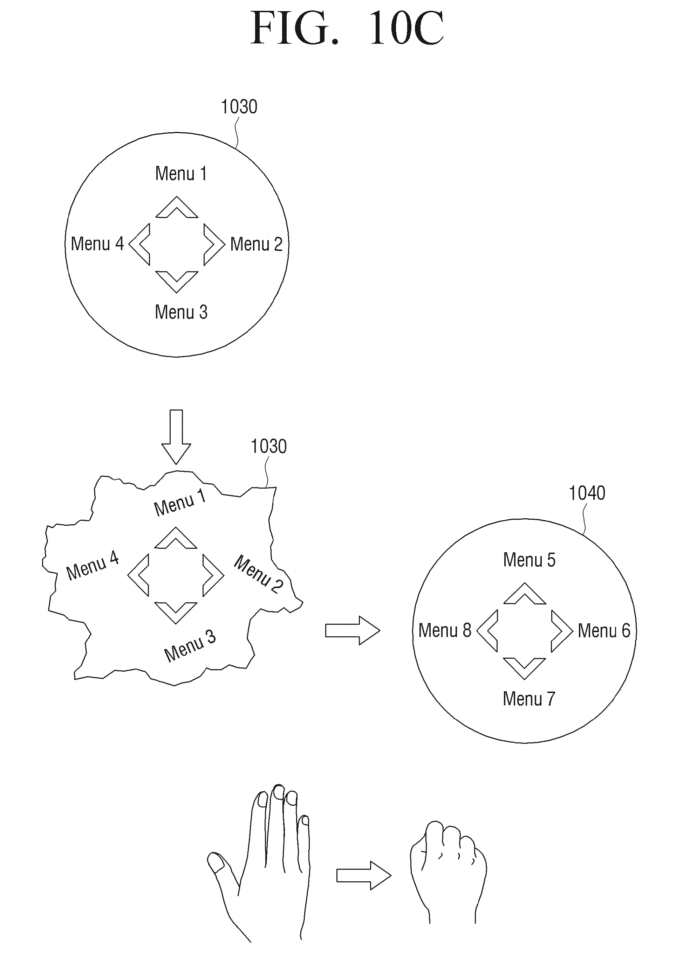

As illustrated in FIG. 10C, in the case of the control using the motion recognition of the user, the control unit 130 may control the display unit 110 to display an animation or transition effect that a standardized first UI 1030 is crumpled or otherwise distorted depending on a user motion of squeezing a hand and display a standardized second UI 1040 at a position at which the first UI 1030 was displayed while displaying an animation effect that the second UI 1040 that was crumpled is uncrumpled.

Meanwhile, the embodiments are not limited to the above-mentioned exemplary embodiment. That is, the control unit 130 may set an animation effect in a scheme corresponding to each of a specific action using a pointer, a specific action using a touch panel, an action of pressing a specific button, a specific motion, and a specific speech and control the display unit 110 to display an animation effect corresponding to the specific motion of the user when the specific motion of the user is present, change the first UI into the second UI, and display the second UI.

As described above, a UI menu is changed by the animation effect corresponding to a motion of the user, thereby making it possible to generate a user's interest.

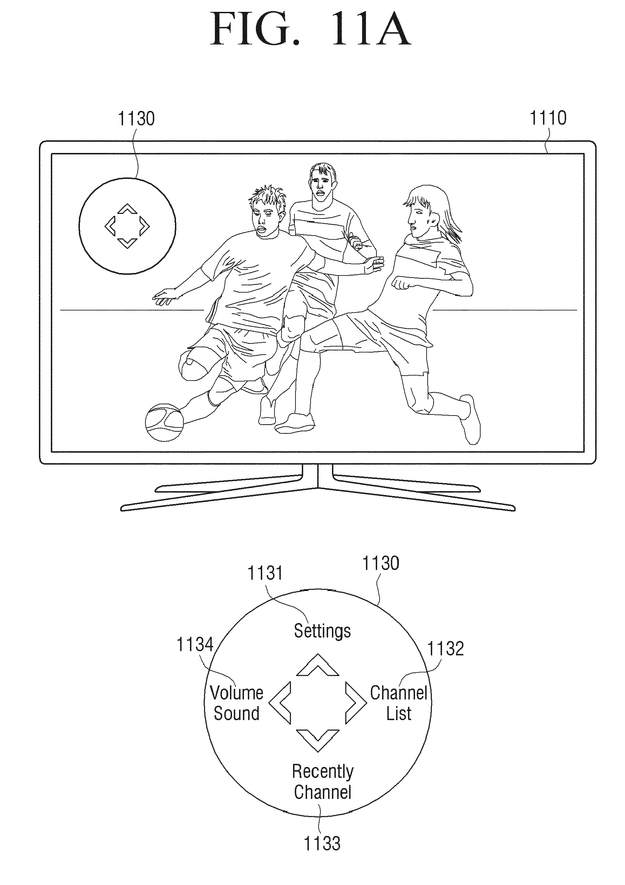

FIGS. 11A to 11C are views illustrating that a UI or GUI including different UI elements is displayed depending on a currently displayed image, according to an exemplary embodiment.

As illustrated in FIGS. 11A to 11C, the control unit 130 may control the display unit 110 to display a first UI including different UI elements depending on a currently displayed image.

TV broadcasting is currently displayed on a screen 1110 of the display unit 110 in FIG. 11A. In this case, the control unit 130 may control the display unit 110 to display a first UI or GUI 1130 including elements 1131 to 1134 corresponding to functions (for example, setting, a channel list, a recently viewed channel, and volume adjustment) required during a period in which the TV broadcasting is viewed.

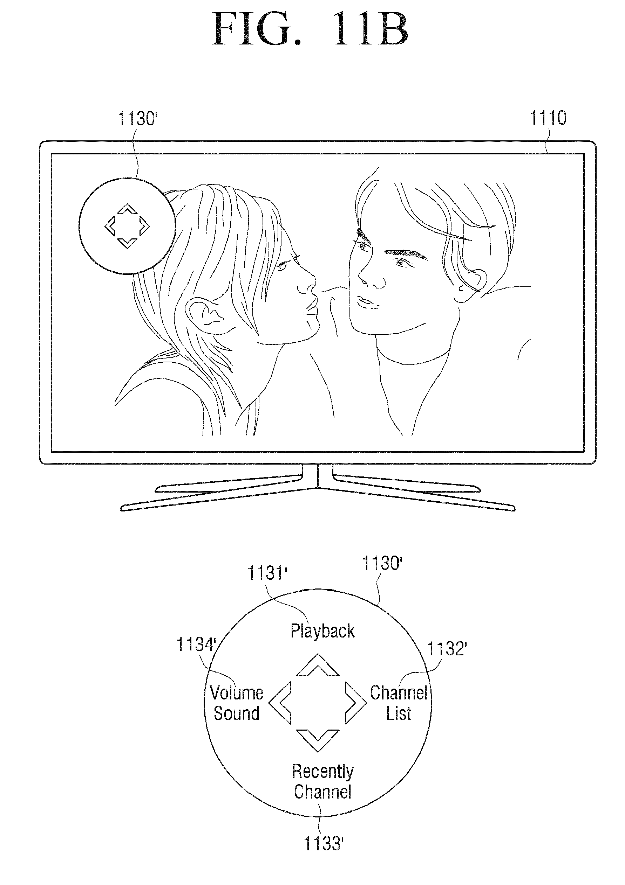

VOD is currently played on a screen 1110 of the display unit 110 in FIG. 11B. In this case, the control unit 130 may control the display unit 110 to display a first UI 1130' including elements 1131' to 1134' corresponding to functions (for example, play-back, a channel list, a recently viewed channel, and volume adjustment) required during a period in which the VOD is played.

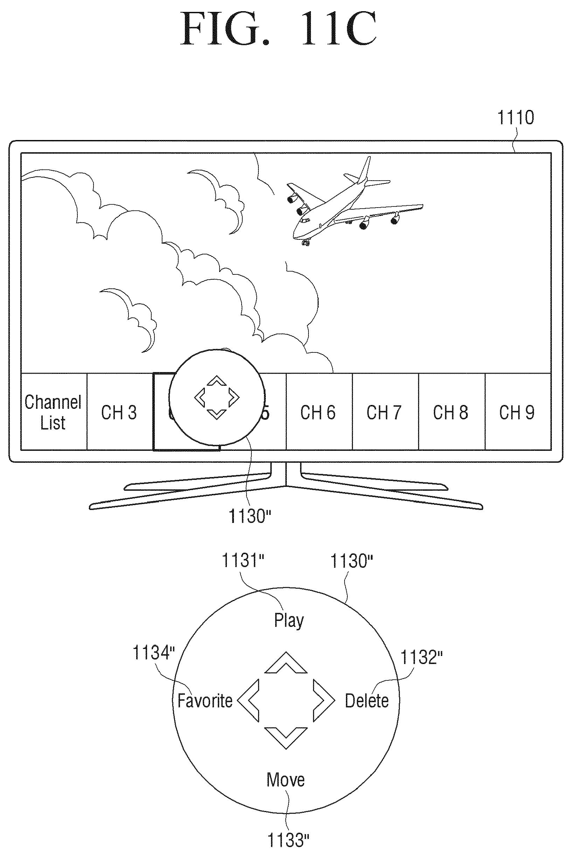

Various menu items that may be selected by the user are currently displayed on a screen 1110 of the display unit 110 in FIG. 11C. In this case, the control unit 130 may control the display unit 110 to display a first UI or GUI 1130 "including elements 1131" to 1134" corresponding to functions (for example, play, deletion from a menu list, movement of a highlight, registration as a preferring menu) that may be performed.

Meanwhile, similar to the standardized first UI or GUI, the second standardized UI or GUI may be displayed on the display unit 110 so as to include different UI elements depending on a currently displayed image by a control of the control unit 130. For example, in the case in which the VOD is currently played on the screen 1110 of the display unit 110 and the first UI or GUI 1130' including the elements 1131' to 1134' corresponding to the functions (for example, the play-back, the channel list, the recently viewed channel, and the volume adjustment) required during the period in which the VOD is played is displayed, the control unit 130 may control the display unit 110 to display a second UI including elements corresponding to functions (for example, pause, fast winding, rewinding, and stop) required during the period in which the VOD is played when a preset user motion is input.

As described above, the UIs are differently displayed depending on the currently displayed image, thereby making it possible to induce convenient use of the user.

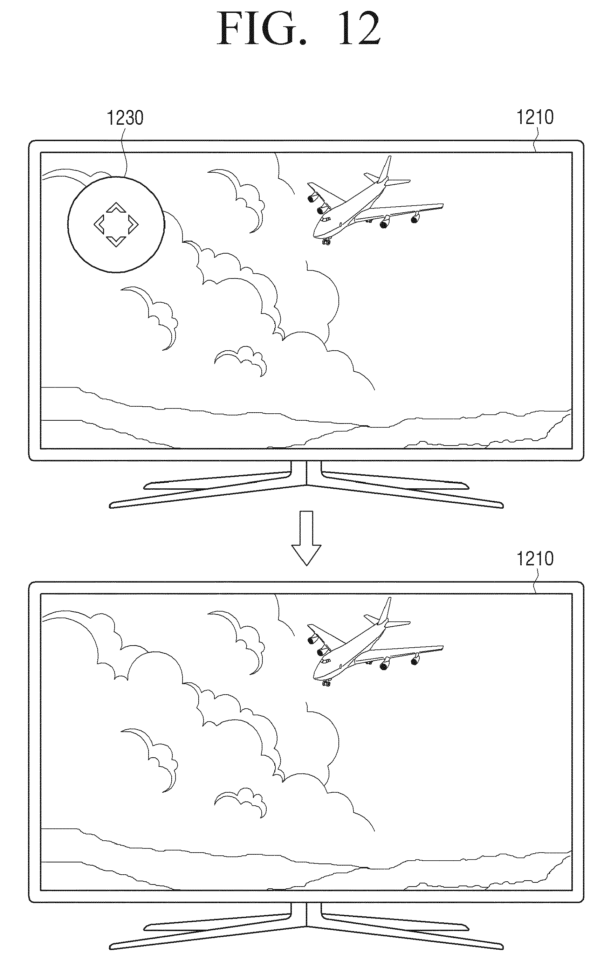

FIG. 12 is a view illustrating that a UI displayed on a screen of a TV disappears, according to an exemplary embodiment.

As illustrated in FIG. 12, when the user does not input any command during or for a preset time or performs the same manipulation as a manipulation performed while inputting a UI generating command, the control unit 130 may control the display unit 110 so that a first UI 1230 or a second UI (not illustrated) displayed on a screen 1210 of the display unit 110 disappears. An animation effect, such as a fade-out may be used in the disappearance.

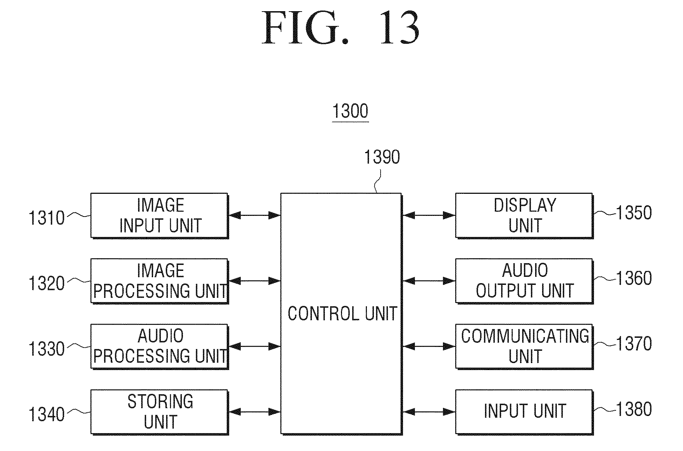

FIG. 13 is a block diagram illustrating a configuration of a display apparatus according to another exemplary embodiment.

As illustrated in FIG. 13, the display apparatus 1300 may include an image input unit 1310, an image processing unit 1320, an audio processing unit 1330, a storing unit 1340, a display unit 1350, an audio output unit 1360, a communicating unit 1370, an input unit 1380, and a control unit 1390 which may comprise a processor or computer.

The image input unit 1310 may receive image data through various sources. In detail, the image input unit 1310 may receive broadcasting data from an external broadcasting station and receive image data from an external apparatus (for example, a set top box, a digital versatile disk (DVD) apparatus, or a universal serial bus (USB) apparatus).

The image processing unit 1320 is a component performing processing on the image data received from the image input unit 1310. The image processing unit 1320 may perform various image processing such as decoding, scaling, noise-filtering, frame rate conversion, resolution conversion, and the like, for the image data.

The audio processing unit 1330 is a component performing processing on audio data. The audio processing unit 1330 may perform various processing such as decoding, amplifying, noise-filtering, and the like, for the audio data. The audio data processed in the audio processing unit 1330 may be output to the audio output unit 1360.

The storing unit 1340 may include various program modules. Some of the various program modules may be omitted or the various program modules may be modified or include other additional program modules, depending on a kind or characteristics of the display apparatus 1300.

The display unit 1350 may display an image generated by processing, in the image processing unit 1320, the image data received from the image input unit 1310. In addition, the display unit 1350 may perform a function of the display unit 110 described in FIG. 1.

The audio output unit 1360 is a component outputting various notification sounds or an audio message as well as various audio data processed in the audio processing unit 1330.

The communicating unit 1370 is a component performing communication with various types of external devices in various types of communication schemes. The communicating unit 1370 may include various communication chips such as a Wi-Fi chip, a Bluetooth chip, a near field communication (NFC) chip, a wireless communication chip, and the like. Here, the Wi-Fi chip, the Bluetooth chip, and the NFC chip perform communication in a Wi-Fi scheme, a Bluetooth scheme, an NFC scheme, respectively. Among them, the NFC chip means a chip operated in the NFC scheme using a band of 13-56MHz among various RFID frequency bands such as 135kHz, 13-56MHz, 433MHz, 860∼960MHz, 2.45GHz, and the like. In the case of using the Wi-Fi chip or the Bluetooth chip, various connection information such as an SSID, a session key, and the like, is first transmitted and received and communication is connected by using the connection information. Then, various information may be transmitted and received. The wireless communication chip means a chip performing communication depending on various communication protocols such as IEEE, ZigBee, 3rd generation (3G), 3rd generation partnership project (3GPP), long term evolution (LTE), and the like. The input unit 1380 receives a user command for controlling a general operation of the display apparatus 1300. In addition, the input unit 1380 may perform a function of the input unit 120 described in FIG. 1.

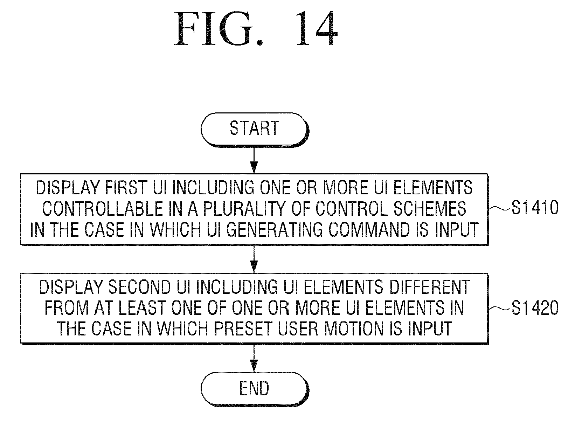

The control unit 1390 controls the general operation of the display apparatus 1300 using the various computer programs stored in the storing unit 1340. In addition, the control unit 1390 may perform a function of the control unit 130 described in FIG. 1. FIG. 14 is a flow chart for describing a UI displaying method of a display apparatus according to an exemplary embodiment.

Referring to FIG. 14, first, in the case in which a UI or GUI generating command is input, a standardized first UI or GUI including one or more UI elements controllable in a plurality of control schemes is displayed (S1410).

In detail, when the user presses a specific button of the remote control apparatus, takes a specific pointing action using the remote control apparatus, takes a specific action using the touch panel included in the remote control apparatus, takes a specific motion, or speaks a specific word, it may be recognized that the UI generating command is input, and the first UI may be displayed.

In addition, the first UI may include UI elements corresponding to the respective functions of the display apparatus. For example, the first UI may include one or more of a UI element corresponding to a volume adjusting function, a UI element corresponding to a setting function, a UI element corresponding to a channel list searching function, and a UI element corresponding to a recently viewed channel searching function.

In addition, the user may control the UI elements in a plurality of control schemes. In detail, the user may select the UI elements using at least one of a control scheme using direction keys of the remote control apparatus, a control scheme using a pointing motion of the remote control apparatus, a control scheme using the touch panel included in the remote control apparatus, a control scheme using a photographed user motion, and a control scheme using a user speech.

Meanwhile, in the case in which or when a preset user motion is input, a standardized second UI or GUI including UI elements different from at least one of the one or more UI elements is displayed (S1420).

Here, the preset user motion may be an action of pressing a specific button of the remote control apparatus, an action of shaking the remote control apparatus, an action of overturning the remote control apparatus, a specific pointing action using the remote control apparatus, a specific action (an action of pressing a touch pad, an action of simultaneously pressing two points, or the like) using the touch panel of the remote control apparatus, a specific motion (an action of shaking a hand or an arm, an action of overturning the hand, the arm, or the like, an action of squeezing the hand, or the like) in the case of motion recognition, and an action of speaking a specific word ("next", or the like) in the case of speech recognition. However, the preset user motion is not limited thereto in embodiments of the invention, but may include user motions in various forms for displaying the second UI.

Meanwhile, the second UI includes UI elements different from at least one of one or more UI elements included in the first UI. For example, in the case in which the first UI includes a first element, a second element, a third element, and a fourth element, a newly displayed second UI may include a fifth element, a sixth element, a seventh element, and an eighth element. In addition, in the case in which the first UI includes a first element, a second element, a third element, and a fourth element, only some of the elements displayed in the first UI may be changed, such that a newly displayed second UI may include the second element, the third element, the fourth element, and a fifth element.

As discussed, embodiments of the invention can provide a display apparatus, comprising: a display unit arranged to display an image; an input unit arranged to receive a user command via a plurality of control schemes; and a control unit arranged to control the display unit to display a first user interface, UI, including one or more first UI elements controllable in the plurality of control schemes when a UI generating command is input through the input unit via one of the plurality of control schemes, and to control the display unit to display a second UI including second UI elements different from at least one of the one or more UI elements when a preset user action (or command) is input through the input unit. Hence, the first user interface can be controlled via the plurality of control schemes.

The preset user action (or command) may be an action of pressing a specific button of the remote control apparatus, an action of shaking the remote control apparatus, an action of overturning the remote control apparatus, a specific pointing action using the remote control apparatus, a specific action (an action of pressing a touch pad, an action of simultaneously pressing two points, or the like) using the touch panel of the remote control apparatus, a specific motion (an action of shaking a hand, an arm, or the like, an action of overturning the hand or the arm, an action of squeezing the hand, or the like) in the case of motion recognition, and an action of speaking a specific word ('next', or the like) in the case of speech recognition. The preset user action may be a preset user motion.

The first and second UIs may respectively include four UI elements corresponding to four directions, which may be orthogonal. For example, the four directions may correspond to up, down, left and right as displayed on the display unit. Hence, the user may select a UI element by taking an action via the input unit that corresponds to selecting a direction.

Meanwhile, although the case in which all the components configuring an exemplary embodiment are combined with each other as one component or are combined and operated with each other has been described is not necessarily limited thereto. That is, all the components may also be selectively combined and operated with each other as one or more components without departing from the scope thereof. In addition, although each of all the components may be implemented by one independent hardware, some or all of the respective components which are selectively combined with each other may be implemented by a computer program having a program module performing some or all of functions combined with each other in one or plural hardware.

Codes and code segments configuring the computer program may be easily inferred by those skilled in the art to which the embodiments pertain. The computer program is stored in non-transitory computer readable media and is read and executed by a computer, thereby making it possible to implement an exemplary embodiment.

Here, the non-transitory computer readable media are not media that store data therein for a while, such as a register, a cache, a memory, or the like, but mean media that semi-permanently store data therein and are readable by a device. In detail, the programs described above may be stored and provided in the non-transitory computer readable medium such as a CD, a digital versatile disk (DVD), a hard disk, a Blu-ray disk, a USB, a memory card, a ROM, or the like.

Although exemplary embodiments have been illustrated and described, the embodiments are is not limited to the above-mentioned specific exemplary embodiment, but may be variously modified by those skilled in the art to which it pertains without departing from the scope as claimed in the claims. In addition, such modifications should also be understood to fall within the scope thereof.

Although a few embodiments have been shown and described, it would be appreciated by those skilled in the art that changes may be made in these embodiments without departing from the principles thereof, the scope of which is defined in the claims and their equivalents.

## Claims

1. A display apparatus, comprising:
a display unit arranged to display an image;
an input unit arranged to receive a user command; and
a control unit arranged to control the display unit to display a first user interface, UI, including one or more first UI elements controllable in a plurality of control schemes when a UI generating command is input through the input unit and to control the display unit to display a second UI including second UI elements different from at least one of the one or more UI elements when a preset user action is input through the input unit.

2. The display apparatus as claimed in claim 1, wherein the first and second UIs respectively include four UI elements corresponding to four directions, and
the control unit is arranged to execute a function of a UI element of a direction corresponding to a user command corresponding to one of the four directions when the user command corresponding to one of the four directions is input.

3. The display apparatus as claimed in claim 1 or 2, wherein the plurality of control schemes are at least one of a direction control scheme using direction keys of a remote control apparatus, a pointing control scheme using a pointing motion of the remote control apparatus, a touch control scheme using a touch panel included in the remote control apparatus, a user motion control scheme using a captured user motion, and a user speech control scheme using user speech.

4. The display apparatus as claimed in any one of claims 1 to 3, wherein when the UI generating command is input during a period in which a highlight is displayed on one of a plurality of menu items displayed on the display unit, the control unit is arranged to control the display unit to display the first UI in a vicinity of a menu item on which the highlight is displayed.

5. The display apparatus as claimed in any one of claims 1 to 4, wherein when the UI generating command is input during a period when a pointer is displayed on the display unit, the control unit is arranged to control the display unit to change the pointer into the first UI and display the first UI.

6. The display apparatus as claimed in any one of claims 1 to 5, wherein the control unit is arranged to control the display unit to display the first UI including different UI elements depending on a currently displayed image.

7. The display apparatus as claimed in any one of claims 1 to 6, wherein the control unit is arranged to control the display unit to change the first UI into the second UI and display the second UI with an animation effect in an animation scheme corresponding to the preset user action.

8. The display apparatus as claimed in any one of claims 1 to 7, wherein when a UI element of a direction corresponding to the user command is selected, the control unit is arranged to control the display unit to display the second UI including second UI elements corresponding to sub-functions of a function of a selected UI element.

9. The display apparatus as claimed in any one of claims 1 to 8, wherein the control unit is arranged to control the display unit to display the first UI including first UI elements set to be displayed depending on a currently displayed image and display the second UI including second UI elements set to be displayed subsequently to the first UI elements set to be displayed when the preset user action is input through the input unit.

10. The display apparatus as claimed in any one of claims 1 to 9, wherein the preset user action comprises at least one of an action of pressing a specific button of a remote control apparatus, an action of shaking the remote control apparatus, an action of overturning the remote control apparatus, a specific pointing action using the remote control apparatus, a specific action using a touch panel of the remote control apparatus, a specific motion in the case of motion recognition, and an action of speaking a specific word in the case of speech recognition.

11. A user interface, UI, displaying method of a display apparatus, comprising:
displaying a first UI including one or more first UI elements controllable in a plurality of control schemes when a UI generating command is input; and
displaying a second UI including second UI elements different from at least one of the one or more first UI elements when a preset user action is input.

12. The UI displaying method of a display apparatus as claimed in claim 11, wherein the first and second UIs include four UI elements corresponding to four directions, and
the UI displaying method of a display apparatus further comprises executing a function of a UI element of a direction corresponding to a user command corresponding to one of the four directions when the user command corresponding to one of the four directions is input.

13. The UI displaying method of a display apparatus as claimed in claim 11, wherein the plurality of control schemes are at least one of a direction control scheme using direction keys of a remote control apparatus, a pointer control scheme using a pointing motion of the remote control apparatus, a touch control scheme using a touch panel included in the remote control apparatus, a user motion control scheme using a captured user motion, and a user speech control scheme using user speech.

14. The UI displaying method of a display apparatus as claimed in claim 11 or 12, wherein the UI generating command is input during a period when a highlight is displayed on one of a plurality of menu items displayed on a display unit, the first UI is displayed in a vicinity of a menu item on which the highlight is displayed; and/or
wherein when the UI generating command is input during a period when a pointer is displayed on a display unit, the pointer is changed into the first UI and the first UI is displayed.

15. The UI displaying method of a display apparatus as claimed in any one of claims 11 to 14, wherein in the displaying of the first UI, the first UI including different UI elements is displayed depending on a currently displayed image.
